(19) Europäisches Patentamt
European Patent Office
Office européen des brevets

(11) **EP 3 426 503 B1**

(12) **FASCICULE DE BREVET EUROPEEN**

(45) Date de publication et mention
de la délivrance du brevet:
**18.05.2022 Bulletin 2022/20**

(51) Classification Internationale des Brevets (IPC):
**B60C 9/00** *(2006.01)*   **B60C 9/20** *(2006.01)*
**B60C 9/22** *(2006.01)*

(21) Numéro de dépôt: **17710778.6**

(22) Date de dépôt: **17.02.2017**

(52) Classification Coopérative des Brevets (CPC):
**B60C 9/2009; B60C 9/0042; B60C 9/0064;**
B60C 2009/2077; B60C 2009/2083;
B60C 2009/2214; B60C 2009/2247;
B60C 2009/2257; B60C 2009/2266

(86) Numéro de dépôt international:
**PCT/FR2017/050365**

(87) Numéro de publication internationale:
**WO 2017/153654 (14.09.2017 Gazette 2017/37)**

(54) **PNEU RADIAL AVEC STRUCTURE DE CEINTURE AMÉLIORÉE**

RADIALREIFEN MIT VERBESSERTER GÜRTELSTRUKTUR

RADIAL TIRE HAVING AN IMPROVED BELT STRUCTURE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **11.03.2016 FR 1652060**

(43) Date de publication de la demande:
**16.01.2019 Bulletin 2019/03**

(73) Titulaire: **Compagnie Générale des
Etablissements Michelin
63000 Clermont-Ferrand (FR)**

(72) Inventeurs:
• **ASTAIX, Camille
63040 CLERMONT-FERRAND CEDEX 9 (FR)**
• **LARDJANE, Aurore
63040 CLERMONT-FERRAND CEDEX 9 (FR)**

(74) Mandataire: **Louret, Sylvain
M.F.P. MICHELIN
Service juridique - Propriété Intellectuelle
CBS/CORP/J/PI - F35 - Site de Ladoux
23, place des Carmes - Déchaux
63040 Clermont-Ferrand Cedex 9 (FR)**

(56) Documents cités:
EP-A1- 2 781 369      EP-A1- 2 957 436
WO-A1-2015/014575     WO-A1-2015/165777

**Description**

1. DOMAINE DE L'INVENTION

La présente invention est relative aux pneumatiques pour véhicules, et à leur armature de sommet ou ceinture. Elle se rapporte plus particulièrement aux stratifiés composites multicouches utilisés dans la ceinture de tels pneumatiques notamment pour véhicule tourisme ou camionnette.

2. ETAT DE LA TECHNIQUE

Un pneumatique à armature de carcasse radiale pour véhicule tourisme ou camionnette comporte, on le sait, une bande de roulement, deux bourrelets inextensibles, deux flancs souples reliant les bourrelets à la bande de roulement et une armature de sommet rigide ou « ceinture » (*"belt"*) disposée circonférentiellement entre l'armature de carcasse et la bande de roulement.

La ceinture de pneumatique est généralement constituée par au moins deux nappes de caoutchouc dites « nappes de travail », « nappes de triangulation » ou encore « armature de travail », superposées et croisées, renforcées le plus souvent de câbles métalliques disposés sensiblement parallèlement les uns par rapport aux autres et inclinés par rapport au plan circonférentiel médian, ces nappes de travail pouvant être associées ou non à d'autres nappes et/ou tissus de caoutchouc. Ces nappes de travail ont pour fonction première de donner au pneu une rigidité ou poussée de dérive (en anglais, *"drift thrust"* ou *"cornering"*) élevée, nécessaire de manière connue pour l'obtention d'un bon comportement routier (*"handling"*) sur véhicule automobile.

La ceinture ci-dessus, ce qui est particulièrement le cas pour les pneumatiques susceptibles de rouler à haute vitesse de manière soutenue, peut comporter en outre une nappe de caoutchouc additionnelle au-dessus des nappes de travail (côté bande de roulement), dite « nappe de frettage » ou « armature de frettage », qui est renforcée généralement par des fils de renforcement dits « circonférentiels », c'est-à-dire que ces fils de renforcement sont disposés pratiquement parallèles les uns aux autres et s'étendent sensiblement circonférentiellement autour de l'enveloppe pneumatique de manière à former un angle préférentiellement compris dans un domaine de -5° à +5° avec le plan circonférentiel médian. Ces fils de renforcement circonférentiels ont pour fonction première, on le rappelle, de résister à la centrifugation du sommet à haute vitesse.

De telles structures de ceintures, consistant finalement en un stratifié composite multicouche comportant au moins une nappe de frettage, le plus souvent textile, et deux nappes de travail généralement métalliques, sont bien connues de l'homme du métier et ne nécessitent pas d'être décrites ici plus en détail. L'état de la technique général décrivant de telles structures de ceintures est illustré en particulier par les documents brevet US 4 371 025, FR 2 504 067 ou US 4 819 705, EP 738 615, EP 795 426 ou US 5 858 137, EP 1 162 086 ou US 2002/0011296, EP 1 184 203 ou US 2002/0055583.

La disponibilité en aciers de plus en plus résistants et endurants fait que les manufacturiers de pneumatiques s'orientent aujourd'hui, autant que possible, vers l'emploi dans les ceintures de pneumatiques de câbles à structure très simple, notamment à seulement deux fils, voire même de filaments unitaires, afin d'une part de simplifier la fabrication et diminuer les coûts, d'autre part de diminuer l'épaisseur des nappes de renforcement et ainsi l'hystérèse des pneumatiques, en fin de compte réduire la consommation d'énergie des véhicules équipés de tels pneumatiques.

Les efforts visant à réduire la masse des pneumatiques, en particulier par une réduction d'épaisseur de leur ceinture et des couches de caoutchouc la constituant, se heurtent toutefois, bien naturellement, à des limites physiques qui peuvent donner lieu à un certain nombre de difficultés. Il peut notamment se produire que la fonction de frettage apportée par l'armature de frettage et celle de rigidification apportée par l'armature de travail ne soient plus suffisamment différenciées l'une de l'autre et puissent se perturber mutuellement. Ceci est préjudiciable au bon fonctionnement du sommet du pneumatique, à la performance et l'endurance globale du pneumatique.

C'est ainsi que les demandes de brevet WO 2013/117476, WO 2013/117477, WO 2015/014574 et WO 2015/014575 déposées par les Demanderesses ont proposé un stratifié composite multicouche de structure spécifique qui permet d'alléger notablement la ceinture des pneumatiques, et donc d'abaisser leur résistance au roulement, tout en palliant les inconvénients cités ci-dessus.

Ces demandes divulguent un pneumatique radial, définissant trois directions principales, circonférentielle, axiale et radiale, comportant un sommet surmonté d'une bande de roulement, deux flancs, deux bourrelets, chaque flanc reliant chaque bourrelet au sommet, une armature de carcasse ancrée dans chacun des bourrelets et s'étendant dans les flancs et dans le sommet, une armature de sommet ou ceinture s'étendant dans le sommet selon la direction circonférentielle et située radialement entre l'armature de carcasse et la bande de roulement, ladite ceinture comportant un stratifié composite multicouche comportant au moins trois couches superposées de renforts, lesdits renforts étant dans chaque couche unidirectionnels et noyés dans une épaisseur de caoutchouc, avec notamment :

o côté bande de roulement, une première couche de caoutchouc comportant une première rangée de renforts, orientés selon un angle alpha de -5 à +5 degrés par rapport à la direction circonférentielle, ces renforts dits premiers renforts étant en matériau textile thermorétractile ;

o au contact de la première couche et disposée sous cette dernière, une deuxième couche de caoutchouc comportant une deuxième rangée de renforts, orientés selon un angle beta donné, positif ou négatif, compris entre 10 et 30 degrés par rapport à la direction circonférentielle, ces renforts dits deuxièmes renforts étant des renforts métalliques ;

o au contact de la deuxième couche et disposée sous cette dernière, une troisième couche de caoutchouc comportant une troisième rangée de renforts, orientés selon un angle gamma opposé à l'angle beta, lui-même compris entre 10 et 30 degrés par rapport à la direction circonférentielle, ces renforts dits troisièmes renforts étant des renforts métalliques.

Selon ces demandes, les premiers renforts textiles sont constitués de fibres multifilamentaires, par exemple en polyamide ou en polyester, ces fibres étant retordues ensemble sous forme de cordes textiles ou bien tordues individuellement sur elles-mêmes, ou encore constitués de mono filaments de diamètre important ou assemblages de tels mono filaments. Les deuxièmes et troisièmes renforts consistent quant à eux en des mono filaments en acier, en particulier en acier au carbone à très haute résistance.

Les demandes de brevet ci-dessus ont démontré qu'il était possible, grâce à la construction spécifique de leur stratifié multicouche, notamment à l'utilisation de renforts circonférentiels textiles dont la thermorétractabilité est contrôlée et de renforts métalliques sous forme de mono fils unitaires de faible diamètre, de réduire de manière notable l'épaisseur globale des ceintures de pneumatiques, et ceci sans nuire à la bonne mise en œuvre et à la différentiation des fonctions d'une part de frettage apportées par les renforts circonférentiels de la première couche, d'autre part de rigidification apportées par les renforts métalliques des deux autres couches.

Ainsi, peuvent être diminués le poids des pneumatiques et leur résistance au roulement, à coût réduit grâce à l'utilisation de monofilaments en acier ne nécessitant aucune opération d'assemblage préalable, ceci sans pénaliser la rigidité de dérive et donc le comportement routier, ni l'endurance globale en roulage.

Les efforts visant à réduire la masse des pneumatiques, particulièrement par une réduction d'épaisseur de leur ceinture et des couches de caoutchouc la constituant, se heurtent toutefois à un certain nombre d'inconvénients.

Une difficulté est liée notamment au risque de pénétration, à travers la bande de roulement par exemple à la suite de coupures, d'agents corrosifs tels que l'eau ou l'oxygène de l'air, et à leur cheminement à travers la première couche de renforts textiles jusqu'aux renforts métalliques de la ceinture, risque bien entendu qui se trouve augmenté lorsqu'on tente de réduire les épaisseurs de caoutchouc mentionnée ci-dessus. La présence de ces agents, tout particulièrement de cette humidité, joue un rôle important en risquant de provoquer une corrosion de surface des renforts métalliques, sans parler d'un risque de dégradation de l'adhésion avec le caoutchouc environnant.

## 3. BREVE DESCRIPTION DE L'INVENTION

Poursuivant leurs recherches, les Demanderesses ont mis au point un stratifié composite multicouche amélioré, d'architecture nouvelle, qui répond au problème ci-dessus et qui peut donc constituer une alternative avantageuse aux stratifiés décrits dans les demandes précitées.

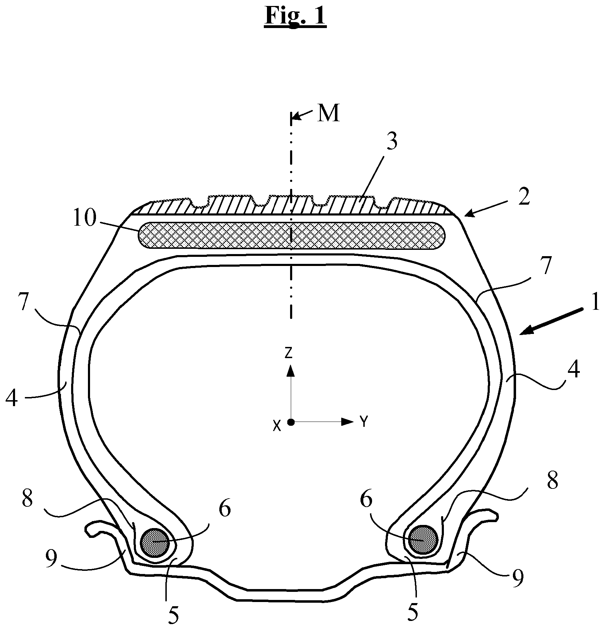

Ainsi, selon un premier objet, la présente invention concerne un pneumatique radial tel que défini dans la revendication 1, c'est-à-dire (selon les références données aux figures 1 à 3 annexées) un pneu radial (1), définissant trois directions principales, circonférentielle (X), axiale (Y) et radiale (Z), comportant un sommet (2) surmonté d'une bande de roulement (3), deux flancs (4), deux bourrelets (5), chaque flanc (4) reliant chaque bourrelet (5) au sommet (2), une armature de carcasse (7) ancrée dans chacun des bourrelets (5) et s'étendant dans les flancs (4) jusqu'au sommet (2), une armature de sommet ou ceinture (10) s'étendant dans le sommet (2) selon la direction circonférentielle (X) et situé radialement entre l'armature de carcasse (7) et la bande de roulement (3), ladite ceinture (10) comportant un stratifié composite multicouche comportant au moins trois couches superposées de renforts (110, 120, 130), lesdits renforts étant dans chaque couche unidirectionnels et noyés dans une épaisseur de caoutchouc (respectivement C1, C2, C3), avec :

o côté bande de roulement, une première couche de caoutchouc (C1) comportant au moins une rangée de renforts textiles (110), orientés selon un angle alpha de -5 à +5 degrés par rapport à la direction circonférentielle (X), ces renforts (110) étant en matériau textile thermorétractile ;

o au contact de la première couche (C1) et disposée sous cette dernière, une deuxième couche de caoutchouc (C2) comportant une première rangée de renforts métalliques (120) (aussi dénommés premiers renforts métalliques) orientés selon un angle beta donné, positif ou négatif, compris entre 10 et 30 degrés par rapport à la direction circonférentielle (X) ;

o au contact de la deuxième couche (C2) et disposée sous cette dernière, une troisième couche de caoutchouc (C3) comportant une deuxième rangée de renforts métalliques (130) (aussi dénommés deuxièmes renforts métalliques) orientés selon un angle gamma opposé à l'angle beta, lui-même compris entre 10 et 30 degrés par rapport à la direction circonférentielle (X) ;

o les renforts métalliques (120, 130) étant des monofilaments en acier de diamètre ou d'épaisseur, respectivement D1 et D2, compris(e) entre 0,20 mm et 0,50 mm, ce pneu étant caractérisé en ce que les renforts (110) en matériau textile thermorétractile sont des rubans d'épaisseur notée « T » comprise entre 0,1 et 1 mm et de largeur notée « W » comprise entre 2 et 50 mm, ces renforts présentant une force de contraction Fc, mesurée à 180°C sous 3% d'élongation, supérieure à 20 N.

Les risques de corrosion ou de perte d'adhésion évoqués ci-dessus sont réduits de manière notable, dans le stratifié, grâce à l'emploi de renforts textiles (110) sous forme de rubans, possiblement disposés en spires très proches les unes des autres dans la direction axiale (Y) voire en quinconce sur plusieurs couches, offrant ainsi un effet de « barrière » à l'eau ou aux agents corrosifs nettement amélioré comparativement aux cordes textiles conventionnelles à base de fibres multifilamentaires telles que décrites dans les demandes WO 2013/117476 et WO 2013/117477, ou encore aux monofilaments de diamètre important comme décrits dans WO 2015/014574 et WO 2015/014575.

En outre, ces rubans pouvant présenter, pour une même résistance à la rupture en traction, une épaisseur notablement réduite comparativement aux renforts textiles conventionnels cités ci-dessus, il en découle comme autre avantage notable celui de pouvoir réduire encore l'épaisseur globale de la ceinture et l'hystérèse du pneumatique.

Le stratifié composite multicouche selon l'invention est utilisable comme élément de renforcement de ceinture de tout type de pneumatique, particulièrement pour véhicule tourisme incluant notamment les véhicules 4x4 et "SUV" (*Sport Utility Vehicles*) ou pour véhicule camionnette.

L'invention ainsi que ses avantages seront aisément compris à la lumière de la description détaillée et des exemples de réalisation qui suivent, ainsi que des figures 1 à 3 relatives à ces exemples qui schématisent (sauf indication contraire, sans respect d'une échelle spécifique) :

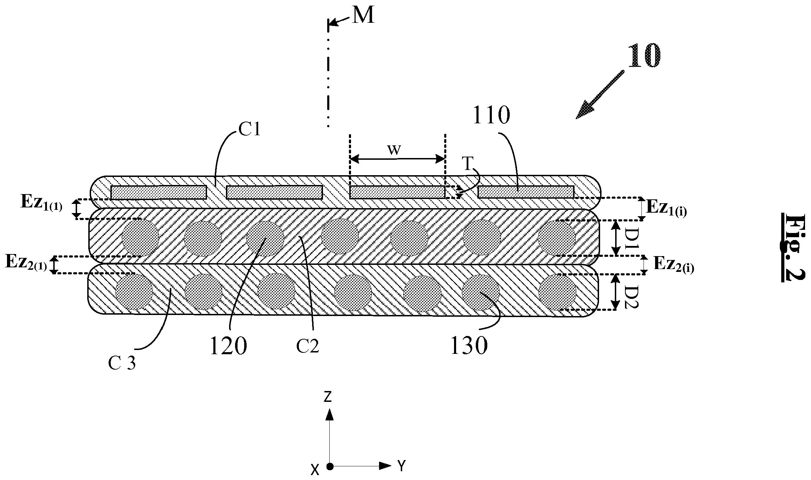

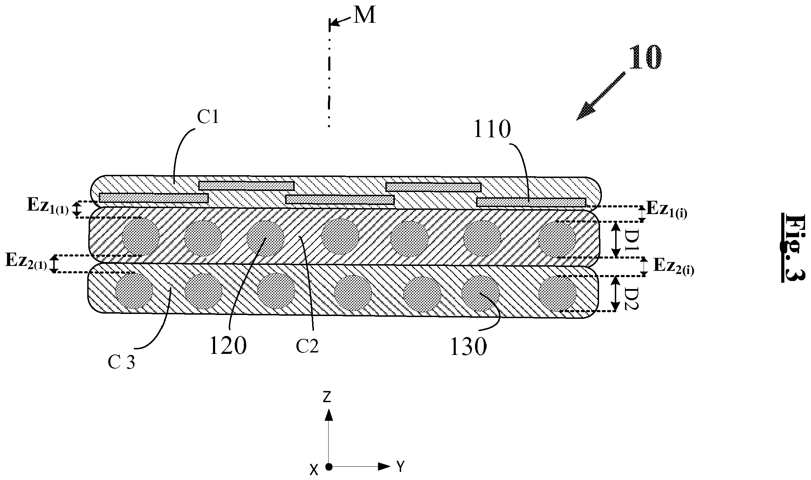

- en coupe radiale (c'est-à-dire selon un plan contenant l'axe de rotation du pneumatique), un exemple de pneumatique (1) conforme à l'invention, incorporant dans sa ceinture (10) un stratifié composite multicouche conformément à l'invention (Fig. 1) ;
- en coupe transversale, deux exemples de stratifié composite multicouche (C1, C2, C3) utilisés dans le pneumatique (1) conforme à l'invention, utilisant les renforts (110) en matériau textile thermorétractile sous la forme de rubans (Fig. 2 et Fig. 3).

## 4. DEFINITIONS

Dans la présente demande, on entend par :

- "caoutchouc" ou "élastomère" (les deux termes étant considérés comme synonymes) : tout type d'élastomère, qu'il soit du type diénique ou du type non diénique par exemple thermoplastique ;
- "composition de caoutchouc" ou "composition caoutchouteuse" : une composition qui comporte au moins un caoutchouc et une charge ;
- "couche" : une feuille, bande ou tout autre élément d'épaisseur relativement faible par rapport à ses autres dimensions, de préférence dont le rapport de l'épaisseur sur la plus grande des autres dimensions est inférieur à 0,5, plus préférentiellement inférieur à 0,1 ;
- "direction axiale" : une direction sensiblement parallèle à l'axe de rotation du pneumatique ;
- "direction circonférentielle" : une direction qui est sensiblement perpendiculaire à la fois à la direction axiale et à un rayon du pneumatique (en d'autres termes, tangente à un cercle dont le centre est sur l'axe de rotation du pneumatique) ;
- "direction radiale" : une direction selon un rayon du pneumatique, c'est-à-dire une direction quelconque passant par l'axe de rotation du pneumatique et sensiblement perpendiculairement à cette direction, c'est-à-dire faisant avec une perpendiculaire à cette direction un angle ne s'écartant pas de plus de 5 degrés ;
- "monofilament" ou indistinctement "monofil", de manière générale, tout filament unitaire, quelle que soit la forme de sa section droite, dont le diamètre (cas d'une section droite circulaire) ou l'épaisseur (cas d'une section droite non circulaire) sont supérieurs à 100 $\mu$m. Cette définition couvre aussi bien des monofils de forme essentiellement cylindrique (à section droite circulaire) que des mono filaments de forme différente, par exemple des monofilaments oblongs (de forme aplatie), ou de section droite rectangulaire ou carrée ;
- "orienté selon un axe ou une direction" en parlant d'un élément quelconque tel qu'un renfort, un élément qui est orienté sensiblement parallèlement à cet axe ou cette direction, c'est-à-dire faisant avec cet axe ou cette direction un angle ne s'écartant pas de plus de 5 degrés (donc nul ou au plus égal à 5 degrés) ;

- "orienté perpendiculairement à un axe ou une direction" : en parlant d'un élément quelconque tel qu'un renfort, un élément qui est orienté sensiblement perpendiculairement à cet axe ou cette direction, c'est-à-dire faisant avec une perpendiculaire à cet axe ou cette direction un angle ne s'écartant pas de plus de 5 degrés ;
- "plan circonférentiel médian" (noté M) : le plan perpendiculaire à l'axe Y de rotation du pneumatique qui est situé à mi-distance des deux bourrelets et passe par le milieu de l'armature de sommet ou ceinture ;
- "renfort" ou "fil de renforcement" au sens le plus général : tout brin long et fin c'est-à-dire filiforme, longiligne, de grande longueur relativement à sa section transversale, notamment tout filament unitaire, toute fibre multifilamentaire ou tout assemblage de tels filaments ou fibres tels qu'un retors ou un câble, ce brin ou fil pouvant être rectiligne comme non rectiligne, par exemple torsadé, ou ondulé, un tel brin ou fil étant susceptible de renforcer une matrice de caoutchouc (c'est-à-dire augmenter les propriétés en traction de la matrice) ;
- "renfort plat" ou "ruban" un renfort qui a pour caractéristique d'être plat, donc de se présenter sous la forme d'une bande, d'un film étroit de grande longueur relativement à sa section transversale ; le rapport de forme ou ratio largeur sur épaisseur (W/T) de sa section droite est de préférence supérieur à 3, plus préférentiellement supérieur à 5, quelle que soit la forme particulière, rectangulaire ou non rectangulaire, par exemple ovale ou oblongue, concave ou convexe de cette section droite, étant entendu que la forme préférentielle de la section droite du ruban est sensiblement rectangulaire ou oblongue ;
- "renforts unidirectionnels" : des renforts essentiellement parallèles entre eux, c'est-à-dire orientés selon un même axe ;
- "stratifié" ou "stratifié multicouche" : au sens de la classification internationale des brevets, tout produit comportant au moins deux couches, de forme plane ou non plane, qui sont au contact l'une de l'autre, ces dernières pouvant être ou non liées, connectées entre elles ; l'expression "lié" ou "connecté" doit être interprétée de façon extensive de manière à inclure tous les moyens de liaison ou d'assemblage, en particulier par collage.

D'autre part, sauf indication expresse différente, tous les pourcentages (%) indiqués sont des % en masse.

L'expression « x et/ou y » signifie « x » ou « y » ou les deux (c'est-à-dire « x et y »). Tout intervalle de valeurs désigné par l'expression « entre a et b » représente le domaine de valeurs allant de plus de « a » à moins de « b » (c'est-à-dire bornes « a » et « b » exclues) tandis que tout intervalle de valeurs désigné par l'expression « de a à b » signifie le domaine de valeurs allant de « a » jusqu'à « b » (c'est-à-dire incluant les bornes strictes « a » et « b »).

## 5. DESCRIPTION DETAILLEE ET EXEMPLES DE REALISATION DE L'INVENTION

A titre d'exemple, la figure 1 représente de manière très schématique (c'est-à-dire sans respect d'une échelle spécifique) une coupe radiale d'un pneumatique conforme à l'invention, par exemple pour véhicule du type tourisme ou camionnette, dont la ceinture comporte un stratifié composite multicouche selon l'invention.

Ce pneumatique (1) conforme à l'invention, définissant trois directions perpendiculaires, circonférentielle (X), axiale (Y) et radiale (Z), comporte un sommet (2) surmonté d'une bande de roulement (3), deux flancs (4), deux bourrelets (5), chaque flanc (4) reliant chaque bourrelet (5) au sommet (2), une armature de carcasse (7) ancrée dans chacun des bourrelets (5) et s'étendant dans les flancs (4) jusqu'au sommet (2), une armature de sommet ou ceinture (10) s'étendant dans le sommet (2) selon la direction circonférentielle (X) et situé radialement entre l'armature de carcasse (7) et la bande de roulement (3). L'armature de carcasse (7) est de manière connue constituée d'au moins une nappe de caoutchouc renforcée par des câblés textiles dits "radiaux", disposés pratiquement parallèles les uns aux autres et s'étendent d'un bourrelet à l'autre de manière à former un angle généralement compris entre 80° et 90° avec le plan circonférentiel médian M ; elle est ici, à titre d'exemple, enroulée autour de deux tringles (6) dans chaque bourrelet (5), le retournement (8) de cette armature (7) étant par exemple disposé vers l'extérieur du pneumatique (1) qui est ici représenté monté sur sa jante (9).

Selon la présente invention, conformément aux représentations des figures 2 et 3 qui seront détaillées ultérieurement, la ceinture (10) du pneumatique (1) comporte un stratifié composite multicouche comportant au moins trois couches superposées (selon la direction Z) de renforts (110, 120, 130), lesdits renforts étant dans chaque couche unidirectionnels et noyés dans une épaisseur de caoutchouc (respectivement C1, C2, C3), avec :

    o côté bande de roulement, une première couche de caoutchouc (C1) comportant au moins une rangée (s'étendant selon la direction Y) de renforts textiles (110), orientés selon un angle alpha ($\alpha$) de -5 à +5 degrés par rapport à la direction circonférentielle (X), ces renforts (110) étant en matériau textile thermorétractile ;

    o au contact de la première couche (C1) et disposée sous cette dernière, une deuxième couche de caoutchouc (C2) comportant une première rangée (s'étendant selon la direction Y) de renforts métalliques (120) orientés selon un angle beta ($\beta$) donné, positif ou négatif, compris entre 10 et 30 degrés par rapport à la direction circonférentielle (X) ;

    o au contact de la deuxième couche (C2) et disposée sous cette dernière, une troisième couche de caoutchouc (C3) comportant une deuxième rangée (s'étendant selon la direction Y) de renforts métalliques (130) orientés selon un angle gamma (γ) opposé à l'angle beta (β), lui-même compris entre 10 et 30 degrés par rapport à la direction circonférentielle (X) ;

o les renforts métalliques (120, 130) étant des monofilaments en acier de diamètre ou d'épaisseur, respectivement D1 et D2, compris(e) entre 0,20 mm et 0,50 mm.

Selon l'invention, les angles β et γ de sens opposés, tous deux compris entre 10° et 30°, peuvent être identiques ou différents, c'est-à-dire que les renforts métalliques des deuxième (120) et troisième (130) rangées peuvent être disposés symétriquement ou pas, de part et d'autre du plan circonférentiel médian (M) précédemment défini.

Dans ce pneumatique schématisé à la figure 1, on comprendra bien entendu que la bande de roulement (3), le stratifié multicouche (10) et l'armature de carcasse (7) peuvent être ou non au contact les uns des autres, même si ces parties ont été volontairement séparées sur la figure 1, schématiquement, pour des raisons de simplification et de clarté du dessin. Elles pourraient être séparées physiquement, tout au moins pour une partie d'entre elles, par exemple par des gommes de liaison, bien connues de l'homme du métier, destinées à optimiser la cohésion de l'ensemble après cuisson ou réticulation.

Selon une caractéristique essentielle de l'invention, les renforts (110) sont des rubans d'épaisseur notée « T » comprise entre 0,1 et 1 mm et de largeur notée « W » comprise entre 2 et 50 mm.

Des rubans en matériau textile thermorétractile tels que décrits dans la présente demande, ou des films plus larges à partir desquels ces rubans peuvent être obtenus par une simple opération de découpe, sont bien connus de l'homme du métier et disponibles commercialement; ils ont été décrits par exemple dans les documents WO 2010/115860, WO 2010/115861, WO2012/049177, WO2012/049206, WO 2013/019366, WO 2013/127685, WO 2014/123715.

L'épaisseur T (mesurée dans la direction radiale Z sur les figures 2 et 3) est comprise de préférence dans un domaine de 0,15 mm à 0,8 mm, plus préférentiellement de 0,2 à 0,6mm. La largeur W (mesurée dans la direction axiale Y sur les figures 2 et 3) est comprise de préférence dans un domaine de 3 mm à 30 mm, plus préférentiellement de 5 à 20 mm.

Tout matériau textile thermorétractile convient, en particulier et préférentiellement un matériau textile vérifiant les caractéristiques de contraction CT énoncées ci-après.

De préférence, ce matériau textile thermorétractile est choisi dans le groupe constitué par les polyamides, les polyesters et les polycétones. Parmi les polyamides, on peut citer notamment les polyamides 4-6, 6, 6-6, 11 ou 12. Parmi les polyesters, on peut citer par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Plus préférentiellement, on utilise un polyamide (nylon) ou un polyester.

La densité $d_0$ des rubans (110) dans la première couche de caoutchouc (C1), mesurée dans la direction axiale (Y), est de préférence comprise entre 3 et 50 rubans/dm, plus préférentiellement entre 5 et 20 rubans/dm.

L'invention s'applique aux cas où plus d'une rangée (par exemple deux rangées) de rubans textiles (110) est utilisée dans la première couche de caoutchouc (C1), comme illustré notamment à la figure 3.

L'invention s'applique également aux cas où les rubans textiles, dans une rangée donnée, ou les spires dans le cas d'un enroulement en hélice selon une direction radiale (Z) du même ruban sur plusieurs spires, sont non jointifs axialement (selon la direction Y), comme illustré à titre d'exemple aux figures 2 et 3, ou bien jointifs axialement (selon la direction Y), voire même, ce qui peut constituer un autre mode avantageux de réalisation de l'invention, partiellement superposés axialement (selon la direction Y).

Leur contraction thermique (notée CT), après 2 min à 185°C, est de préférence inférieure à 7,5%, plus préférentiellement inférieure à 7,0%, en particulier inférieure à 6,0%, valeurs qui se sont révélées préférables pour la stabilité de fabrication et de dimensionnement des enveloppes de pneumatiques, en particulier lors des phases de cuisson et refroidissement des ces dernières.

Il s'agit de la contraction relative de ces rubans (110) dans les conditions énoncées ci-après du test. La grandeur CT est mesurée, sauf précisions différentes, selon la norme ASTM D1204-08, par exemple sur un appareil du type « TESTRITE », sous une prétension dite standard de 0,5 cN/tex (donc ramenée au titre ou densité linéique de l'échantillon testé). A longueur constante, on mesure également le maximum de la force de contraction (notée $F_C$) à l'aide du test ci-dessus, cette fois à une température de 180°C et sous 3% d'élongation. Cette force de contraction $F_C$ est selon l'invention supérieure à 20 N (Newton). Une force de contraction élevée s'est révélée particulièrement favorable à la capacité de frettage des rubans (110) en matériau textile thermorétractile, vis-à-vis de l'armature de sommet du pneumatique lorsque ce dernier s'échauffe sous une haute vitesse de roulage.

Les grandeurs CT et $F_C$ ci-dessus peuvent être indistinctement mesurées sur les renforts textiles initiaux encollés avant leur incorporation dans le stratifié puis dans le pneu, ou bien mesurée sur ces renforts une fois extraits de la zone centrale du pneumatique vulcanisé et de préférence « dégommés » (c'est-à-dire débarrassés du caoutchouc qui les enrobe dans la couche C1).

Les rubans textiles thermorétractiles décrits ci-dessus présentent l'avantage, par rapport aux cordes ou monofilaments textiles conventionnels décrits en introduction du présent mémoire, de mieux protéger contre l'humidité le reste du stratifié composite multicouche, et ainsi de limiter les risques de pénaliser l'adhésion entre les divers renforts du stratifié et leur matrice de caoutchouc environnante, sans compter les risques de corrosion de surface des mono filaments en acier.

Les renforts métalliques (120, 130) consistent en des monofilaments en acier, qui pour rappel ne sont pas tordus, câblés ensemble mais utilisés à l'état unitaire ; leur diamètre (ou par définition épaisseur si le monofilament n'a pas une section droite circulaire), respectivement noté D1 et D2, est compris entre 0,20 mm et 0,50 mm. D1 et D2 peuvent être identiques ou différents d'une couche à l'autre ; s'ils sont différents, D2 peut être supérieur à D1 ou bien inférieur à D1, selon les modes de réalisation particuliers de l'invention.

Plus préférentiellement, pour une endurance optimale du pneu de l'invention, notamment sous des conditions de roulage sévères, on préfère que D1 et D2 soient supérieurs à 0,25 mm et inférieurs à 0,40 mm, plus préférentiellement compris dans un domaine de 0,28 à 0,35 mm.

La densité, notée respectivement $d_1$ et $d_2$, de ces renforts (120, 130) dans respectivement les deuxième (C2) et troisième (C3) couches de caoutchouc, mesurée dans la direction axiale (Y), est comprise de préférence entre 100 et 180 fils/dm, plus préférentiellement entre 110 et 170 fils/dm, en particulier entre 120 et 160 fils/dm.

De préférence, l'acier des mono filaments est un acier au carbone tel que ceux utilisés dans les câbles type "*steel cords*" pour pneumatiques ; mais il est bien entendu possible d'utiliser d'autres aciers, par exemple des aciers inoxydables, ou d'autres alliages.

Selon un mode de réalisation préférentiel, lorsqu'un acier au carbone est utilisé, sa teneur en carbone (% en poids d'acier) est comprise dans un domaine de 0,5% à 1,2%, plus préférentiellement de 0,7% à 1,0%. L'invention s'applique en particulier à des aciers du type *steel cord* à résistance normale (dit "NT" pour "*Normal Tensile* ") ou à haute résistance (dit "HT" pour " *High Tensile* "), les (deuxièmes et troisièmes) renforts en acier au carbone possédant alors une résistance en traction (Rm) qui est de préférence supérieure à 2000 MPa, plus préférentiellement supérieure à 2500 MPa. L'invention s'applique également à des aciers du type *steel cord* à très haute résistance (dit "SHT" pour " *Super High Tensile* "), ultra-haute résistance (dit "UHT" pour "*Ultra High Tensile* " ou "MT" pour "*Mega Tensile* "), les (deuxièmes et troisièmes) renforts en acier au carbone possédant alors une résistance en traction (Rm) qui est de préférence supérieure à 3000 MPa, plus préférentiellement supérieure à 3500 MPa. L'allongement total à la rupture (At) de ces renforts, somme de l'allongement élastique et de l'allongement plastique, est de préférence supérieur à 2,0%.

Pour ce qui concerne les renforts en acier, les mesures de force à la rupture, de résistance à la rupture notée Rm (en MPa) et d'allongement à la rupture noté At (allongement total en %) sont effectuées en traction selon la norme ISO 6892 de 1984.

L'acier utilisé, qu'il s'agisse en particulier d'un acier au carbone ou d'un acier inoxydable, peut être lui-même revêtu d'une couche métallique améliorant par exemple les propriétés de mise en œuvre du mono filament d'acier, ou les propriétés d'usage du renfort et/ou du pneumatique eux-mêmes, telles que les propriétés d'adhésion, de résistance à la corrosion ou encore de résistance au vieillissement. Selon un mode de réalisation préférentiel, l'acier utilisé est recouvert d'une couche de laiton (alliage Zn-Cu) ou de zinc ; on rappelle que lors du procédé de fabrication des fils, le revêtement de laiton ou de zinc facilite le tréfilage du fil, ainsi que le collage du fil avec le caoutchouc. Mais les renforts pourraient être recouverts d'une fine couche métallique autre que du laiton ou du zinc, ayant par exemple pour fonction d'améliorer la résistance à la corrosion de ces fils et/ou leur adhésion au caoutchouc, par exemple une fine couche de Co, Ni, Al, d'un alliage de deux ou plus des composés Cu, Zn, Al, Ni, Co, Sn.

Chaque couche (C1, C2, C3) de composition de caoutchouc (ou ci-après "couche de caoutchouc") constitutive du stratifié composite multicouche, est à base d'au moins un élastomère et une charge.

L'invention s'applique bien entendu aux cas où ces (au moins) trois couches de caoutchouc sont distinguables l'une de l'autre sur une coupe transversale (dans le plan Y, Z) du stratifié, comme illustré à titre d'exemple aux figures 2 et 3, par exemple en raison d'une formulation différente, ou bien non distinguables en coupe par exemple en raison d'une formulation identique d'une couche à l'autre.

De préférence, le caoutchouc est un caoutchouc diénique, c'est-à-dire pour rappel tout élastomère (élastomère unique ou mélange d'élastomères) qui est issu, au moins en partie (i.e., un homopolymère ou un copolymère), de monomères diènes c'est-à-dire de monomères porteurs de deux doubles liaisons carbone-carbone, que ces dernières soient conjuguées ou non.

Cet élastomère diénique est choisi plus préférentiellement dans le groupe constitué par les polybutadiènes (BR), le caoutchouc naturel (NR), les polyisoprènes de synthèse (IR), les copolymères de butadiène, les copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène-styrène (SIR) et les copolymères d'isoprène-butadiène-styrène (SBIR).

Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères.

L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%. Selon un mode de réalisation préférentiel, chaque couche de composition de caoutchouc comporte 50 à 100 pce de caoutchouc naturel. Selon d'autres modes de réalisation préférentiels, l'élastomère diénique peut être constitué, en tout ou partie, d'un autre élastomère diénique tel que, par exemple, un élastomère SBR utilisé en coupage ou non avec un autre élastomère, par exemple du type BR.

Chaque composition de caoutchouc peut comporter un seul ou plusieurs élastomère(s) diénique(s), également tout ou partie des additifs habituellement utilisés dans les matrices de caoutchouc destinées à la fabrication de pneumatiques, tels que par exemple des charges renforçantes comme le noir de carbone ou la silice, des agents de couplage, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute température de transition vitreuse (supérieure à 30°C), des agents facilitant la mise en œuvre (processabilité) des compositions à l'état cru, des résines tackifiantes, des agents antiréversion, des accepteurs et donneurs de méthylène tels que par exemple HMT (hexaméthylènetétramine) ou H3M (hexaméthoxyméthylmélamine), des résines renforçantes (tels que résorcinol ou bismaléimide), des systèmes promoteurs d'adhésion connus du type sels métalliques par exemple, notamment des sels de cobalt, de nickel ou de lanthanide, un système de réticulation ou de vulcanisation.

De préférence, le système de réticulation de la composition de caoutchouc est un système dit de vulcanisation, c'est-à-dire à base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone et/ou de la silice, est de préférence supérieur à 30 pce, notamment compris entre 30 et 100 pce.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogénées présentant une surface BET inférieure à 450 $m^2/g$, de préférence de 30 à 400 $m^2/g$.

L'homme de l'art saura, à la lumière de la présente description, ajuster la formulation des compositions de caoutchouc afin d'atteindre les niveaux de propriétés (notamment module d'élasticité) souhaités, et adapter la formulation à l'application spécifique envisagée.

De préférence, chaque composition de caoutchouc présente, à l'état réticulé, un module sécant en extension, à 10% d'allongement, qui est compris entre 4 et 25 MPa, plus préférentiellement entre 4 et 20 MPa ; des valeurs comprises notamment entre 5 et 15 MPa se sont révélées particulièrement convenir. Les mesures de module sont effectuées en traction, sauf indication différente selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprimé en MPa (conditions normales de température et d'hygrométrie selon la norme ASTM D 1349 de 1999).

Pour faire adhérer les différents renforts (110, 120, 130) à leurs (au moins) trois couches de caoutchouc respectives (C1, C2, C3) précédemment décrites, on pourra utiliser tout système adhésif approprié, par exemple pour ce qui concerne les renforts en acier un revêtement adhésif tel que du laiton ou du zinc (toutefois, on peut aussi utiliser un acier clair, c'est-à-dire non revêtu), ou par exemple pour ce qui concerne les rubans textiles une colle textile du type "RFL" (résorcinol-formaldéhyde-latex) ou toute colle équivalente connue pour conférer une adhésion satisfaisante entre du caoutchouc et des polymères tels que polyester ou en polyamide, comme par exemple les compositions adhésives décrites dans les demandes de brevet WO 2013/017421, WO 2013/017422, WO 2013/017423, WO 2015/007641, WO 2015/007642 ; avant l'encollage type RFL ci-dessus, il pourra être avantageux d'activer la surface du ruban, par exemple par voie physique et/ou chimique, pour améliorer sa prise de colle et/ou son adhésion finale au caoutchouc ; un traitement physique pourra consister par exemple en un traitement par un rayonnement tel qu'un faisceau d'électrons, ou par plasma ; un traitement chimique pourra par exemple consister en un passage préalable dans un bain de résine époxy et/ou de composé isocyanate.

Au moins une (plus préférentiellement la totalité) des caractéristiques préférentielles suivantes, mesurées dans la partie centrale de la ceinture du pneumatique à l'état vulcanisé, de part et d'autre du plan médian (M) sur une largeur axiale totale de 10 cm, est vérifiée:

- l'épaisseur moyenne $Ez_1$ de caoutchouc séparant un ruban textile (110) du renfort métallique (120) qui lui est le plus proche, mesurée dans la direction radiale (Z), est inférieure ou égale à 0,6 mm, plus préférentiellement comprise entre 0,15 et 0,5 mm ;

- l'épaisseur moyenne $Ez_2$ de caoutchouc séparant un premier renfort métallique (120) du deux renfort métallique (130) qui lui est le plus proche, mesurée dans la direction radiale (Z), est inférieure ou égale à 0,6 mm, , plus préférentiellement comprise entre 0,2 et 0,55 mm.

Toutes les données indiquées précédemment (T, W, D1, D2, $d_0$, $d_1$, $d_2$, $Ez_1$ et $Ez_2$) sont des valeurs moyennes mesurées expérimentalement par un opérateur sur des photographies de coupes radiales de pneus vulcanisés, opérées dans la partie centrale de la ceinture, 5 cm de part et d'autre du plan médian (M), soit sur une largeur totale de 10 cm (soit entre - 5 cm et + 5 cm par rapport au plan médian M).

Les figures 2 et 3 représentent de manière schématique (sans respect d'une échelle spécifique), en coupe transversale, deux exemples de stratifié composite multicouche utilisé comme ceinture (10) dans le pneu (1) conforme à l'invention de la figure 1, le stratifié (10) incorporant des rubans (110) en matériau textile thermorétractile respectivement sous la forme d'une seule rangée élémentaire de rubans (Fig. 2) ou de deux rangées distinctes superposées radialement (selon la direction Z) avec des rubans disposés en quincone d'une rangée à l'autre (Fig. 3).

Comme illustré à la figure 2, $Ez_1$ est la moyenne des épaisseurs ($Ez_{1(1)}$, $Ez_{1(2)}$, $Ez_{1(3)}$, ..., $Ez_{1(i)}$) de caoutchouc séparant un (premier) ruban textile (110) du (premier) renfort métallique (120) qui lui est le plus proche, ces épaisseurs étant chacune mesurées dans la direction radiale Z, et moyennées sur une distance axiale totale comprise entre - 5,0 cm et + 5,0 cm par rapport au centre de la ceinture (soit, par exemple au total environ 100 mesures si l'on trouve dix renforts (110) par cm dans la couche C1).

Exprimé autrement, $Ez_1$ est la moyenne des distances minimales $Ez_{1(i)}$ séparant « dos à dos » chaque (premier) ruban textile (110) du premier renfort métallique (120) qui lui est le plus proche dans la direction radiale Z, cette moyenne étant calculée sur l'ensemble des premiers renforts (110) présents dans la partie centrale de la ceinture, dans un intervalle axial s'étendant entre - 5 cm et + 5 cm par rapport au plan médian M.

De même, $Ez_2$ est la moyenne des épaisseurs de caoutchouc ($Ez_{2(1)}$, $Ez_{2(2)}$, $Ez_{2(3)}$, ..., $Ez_{2(i)}$) séparant un premier renfort métallique (120) du deuxième renfort métallique (130) qui lui est le plus proche, mesurées dans la direction radiale Z, cette moyenne étant calculée sur une distance axiale totale comprise entre - 5,0 cm et + 5,0 cm par rapport au centre de la ceinture. Exprimé différemment, ces épaisseurs représentent les distances minimales qui séparent « dos à dos » le premier renfort métallique (120) du deuxième renfort métallique (130) qui lui est le plus proche dans la direction radiale Z.

En d'autres termes, $Ez_2$ est la moyenne des distances minimales $Ez_{2(i)}$ séparant « dos à dos » chaque premier renfort métallique (120) du deuxième renfort métallique (130) qui lui est le plus proche dans la direction radiale Z, cette moyenne étant calculée sur l'ensemble des premiers renforts métalliques (120) présents dans la partie centrale de la ceinture, dans un intervalle axial s'étendant entre- 5 cm et + 5 cm par rapport au plan médian M.

Pour une performance optimisée en termes de résistance au roulement, poussée de dérive et endurance au roulage, le pneu de l'invention vérifie préférentiellement au moins une des inégalités suivantes (plus préférentiellement les trois) :

$$0,15 < Ez_1 / (Ez_1 + T + D1) < 0,50$$

$$0,20 < Ez_2 / (Ez_2 + D1 + D2) < 0,50$$

$$0,25 < (Ez_1 + Ez_2) / (Ez_1 + Ez_2 + T + D1 + D2) < 0,60 \ .$$

Plus préférentiellement encore, le pneu de l'invention vérifie préférentiellement au moins une des inégalités suivantes (plus préférentiellement les trois):

$$0,20 < Ez_1 / (Ez_1 + T + D1) < 0,45$$

$$0,25 < Ez_2 / (Ez_2 + D1 + D2) < 0,45$$

$$0,30 < (Ez_1 + Ez_2) / (Ez_1 + Ez_2 + T + D1 + D2) < 0,55 \ .$$

En résumé, grâce à l'emploi, dans la première couche de caoutchouc (C1), de renforts textiles thermorétractiles sous forme de rubans, les risques de corrosion ou de perte d'adhésion des monofilaments métalliques sont réduits de manière notable. Ces rubans pouvant présenter, pour une même résistance à la rupture en traction, une épaisseur notablement réduite comparativement aux renforts textiles conventionnels tels que décrits en introduction du présent mémoire, il en découle comme autre avantage notable celui de pouvoir réduire encore l'épaisseur globale de la ceinture et l'hystérèse des pneumatiques.

**Revendications**

1. Pneumatique radial (1), définissant trois directions principales, circonférentielle (X), axiale (Y) et radiale (Z), comportant un sommet (2) surmonté d'une bande de roulement (3), deux flancs (4), deux bourrelets (5), chaque flanc (4) reliant chaque bourrelet (5) au sommet (2), une armature de carcasse (7) ancrée dans chacun des bourrelets (5) et s'étendant dans les flancs (4) jusqu'au sommet (2), une armature de sommet ou ceinture (10) s'étendant dans le sommet (2) selon la direction circonférentielle (X) et situé radialement entre l'armature de carcasse (7) et la bande de roulement (3), ladite ceinture (10) comportant un stratifié composite multicouche comportant au moins trois couches superposées de renforts (110, 120, 130), lesdits renforts étant dans chaque couche unidirectionnels et noyés dans une épaisseur de caoutchouc (respectivement C1, C2, C3), avec :

   o côté bande de roulement, une première couche de caoutchouc (C1) comportant au moins une rangée de renforts textiles (110), orientés selon un angle alpha de -5 à +5 degrés par rapport à la direction circonférentielle (X), ces renforts (110) étant en matériau textile thermorétractile ;
   o au contact de la première couche (C1) et disposée sous cette dernière, une deuxième couche de caoutchouc (C2) comportant une première rangée de renforts métalliques (120) orientés selon un angle beta donné, positif ou négatif, compris entre 10 et 30 degrés par rapport à la direction circonférentielle (X) ;
   o au contact de la deuxième couche (C2) et disposée sous cette dernière, une troisième couche de caoutchouc (C3) comportant une deuxième rangée de renforts métalliques (130) orientés selon un angle gamma opposé à l'angle beta, lui-même compris entre 10 et 30 degrés par rapport à la direction circonférentielle (X) ;
   o les renforts métalliques (120, 130) étant des monofilaments en acier de diamètre ou d'épaisseur, respectivement D1 et D2, compris(e) entre 0,20 mm et 0,50 mm.

   **caractérisé en ce que** :
   o les renforts (110) en matériau textile thermorétractile sont des rubans d'épaisseur notée « T » comprise entre 0,1 et 1 mm et de largeur notée « W » comprise entre 2 et 50 mm, ces renforts présentant une force de contraction Fc, mesurée à 180°C sous 3% d'élongation, supérieure à 20 N, la force de contraction Fc étant mesurée selon la norme ASTM D1204-08.

2. Pneumatique selon la revendication 1, dans lequel T est comprise dans un domaine de 0,15 mm à 0,8 mm, de préférence de 0,2 à 0,6 mm.

3. Pneumatique selon l'une quelconque des revendications 1 ou 2, dans lequel W est comprise dans un domaine de 3 mm à 30 mm, de préférence de 5 à 20 mm.

4. Pneumatique selon l'une quelconque des revendications 1 à 3, dans lequel la densité $d_1$ des renforts textiles (110) dans la première couche de caoutchouc (C1), mesurée dans la direction axiale (Y), est comprise entre 3 et 50 rubans/dm, préférentiellement comprise entre 5 et 20 rubans/dm.

5. Pneumatique selon l'une quelconque des revendications 1 à 4, dans lequel D1 et D2 sont chacun supérieurs à 0,25 mm et inférieurs à 0,40 mm, de préférence compris dans un domaine de 0,28 à 0,35 mm.

6. Pneumatique selon l'une quelconque des revendications 1 à 5, dans lequel la densité, respectivement $d_2$ et $d_3$, des premiers (120) et deuxièmes (130) renforts métalliques dans respectivement les deuxième (C2) et troisième (C3) couches de caoutchouc, mesurée dans la direction axiale (Y), est comprise entre 100 et 180 fils/dm.

7. Pneumatique selon l'une quelconque des revendications 1 à 6, dans lequel la contraction thermique CT des renforts textiles (110), après 2 min à 185°C, est inférieure à 7,5%.

8. Pneumatique selon l'une quelconque des revendications 1 à 7, dans lequel l'épaisseur moyenne $Ez_1$ de caoutchouc

séparant un renfort textile (110) du premier renfort métallique (120) qui lui est le plus proche, mesurée dans la direction radiale (Z), est inférieure ou égale à 0,60 mm, $Ez_1$ étant mesurée dans la partie centrale de la ceinture du pneumatique à l'état vulcanisé, de part et d'autre du plan médian (M) sur une largeur axiale totale de 10 cm.

**9.** Pneumatique selon l'une quelconque des revendications 1 à 8, dans lequel l'épaisseur moyenne $Ez_2$ de caoutchouc séparant un premier renfort métallique (120) du deuxième renfort métallique (130) qui lui est le plus proche, mesurée dans la direction radiale (Z), est inférieure ou égale à 0,60 mm, $Ez_2$ étant mesurée dans la partie centrale de la ceinture du pneumatique à l'état vulcanisé, de part et d'autre du plan médian (M) sur une largeur axiale totale de 10 cm.

**10.** Pneumatique selon la revendication 8, dans lequel $Ez_1$ est comprise entre 0,15 et 0,50 mm.

**11.** Pneumatique selon la revendication 9, dans lequel $Ez_2$ est comprise entre 0,20 et 0,60 mm.

**12.** Pneumatique selon la revendication 8, dans lequel l'inégalité suivante est vérifiée :

$$0,15 < Ez_1 / (Ez_1 + T + D1) < 0,50$$

**13.** Pneumatique selon la revendication 9, dans lequel l'inégalité suivante est vérifiée :

$$0,20 < Ez_2 / (Ez_2 + D1 + D2) < 0,50$$

**14.** Pneumatique selon les revendications 8 et 9, dans lequel l'inégalité suivante est vérifiée :

$$0,25 < (Ez_1 + Ez_2) / (Ez_1 + Ez_2 + T + D1 + D2) < 0,60$$

**15.** Pneumatique selon l'une quelconque des revendications 1 à 14, dans lequel le matériau textile thermorétractile constitutif des renforts textiles (110) est un polyamide ou un polyester.

**Patentansprüche**

**1.** Radialreifen (1), der drei Hauptrichtungen definiert, eine Umfangsrichtung (X), eine axiale (Y) und eine radiale (Z) Richtung, umfassend einen Scheitel (2), über dem ein Laufstreifen (3) liegt, zwei Seitenwände (4), zwei Wülste (5), wobei jede Seitenwand (4) jede Wulst (5) mit dem Scheitel (2) verbindet, eine Karkassenbewehrung (7), die in jedem der Wülste (5) verankert ist und sich in den Seitenwänden (4) bis zum Scheitel (2) erstreckt, wobei sich eine Scheitelbewehrung oder ein Gürtel (10) in dem Scheitel (2) entlang der Umfangsrichtung (X) erstreckt und radial zwischen der Karkassenbewehrung (7) und dem Laufstreifen (3) gelegen ist, wobei der Gürtel (10) einen mehrlagigen Verbundschichtstoff umfasst, der mindestens drei übereinander liegende Verstärkungslagen (110, 120, 130) umfasst, wobei die Verstärkungen in jeder Lage unidirektional sind und in eine Kautschukdicke (C1, C2 bzw. C3) einbettet sind, mit:

    o laufstreifenseitig, einer ersten Kautschuklage (C1), die mindestens eine Reihe textiler Verstärkungen (110) umfasst, die gemäß einem Winkel Alpha von -5 bis +5 Grad in Bezug auf die Umfangsrichtung (X) ausgerichtet sind, wobei diese Verstärkungen (110) aus wärmeschrumpfendem textilem Material sind;
    o in Kontakt mit der ersten Lage (C1) und unter Letzterer angeordnet, einer zweiten Kautschuklage (C2), die eine erste Reihe metallischer Verstärkungen (120) umfasst, die gemäß einem gegebenen, positiven oder negativen, Winkel Beta zwischen 10 und 30 Grad in Bezug auf die Umfangsrichtung (X) ausgerichtet sind;
    o in Kontakt mit der zweiten Lage (C2) und unter Letzterer angeordnet, einer dritten Kautschuklage (C3), die eine zweite Reihe metallischer Verstärkungen (130) umfasst, die gemäß einem zum Winkel Beta entgegengesetzten Winkel Gamma ausgerichtet sind, der wiederum zwischen 10 und 30 Grad in Bezug auf die Umfangsrichtung (X) beträgt;
    o wobei die metallischen Verstärkungen (120, 130) Monofilamente aus Stahl mit einem Durchmesser oder einer Dicke D1 bzw. D2 zwischen 0,20 mm und 0,50 mm sind;

**dadurch gekennzeichnet, dass**:

o die Verstärkungen (110) aus wärmeschrumpfendem textilem Material Bänder mit einer mit "T" bezeichneten Dicke zwischen 0,1 und 1 mm und einer mit "W" bezeichneten Breite zwischen 2 und 50 mm sind, wobei diese Verstärkungen eine bei 180 °C unter 3 % Dehnung gemessene Schrumpfkraft Fc von mehr als 20 N aufweisen, wobei die Schrumpfkraft Fc nach der Norm ASTM D1204-08 gemessen wird.

2. Reifen nach Anspruch 1, bei dem T in einem Bereich von 0,15 mm bis 0,8 mm, bevorzugt von 0,2 bis 0,6 mm liegt.

3. Reifen nach einem der Ansprüche 1 oder 2, bei dem W in einem Bereich von 3 mm bis 30 mm, bevorzugt von 5 bis 20 mm liegt.

4. Reifen nach einem der Ansprüche 1 bis 3, bei dem die Dichte $d_1$ der textilen Verstärkungen (110) in der ersten Kautschuklage (C1), gemessen in der axialen Richtung (Y), zwischen 3 und 50 Bänder/dm, bevorzugt zwischen 5 und 20 Bänder/dm beträgt.

5. Reifen nach einem der Ansprüche 1 bis 4, bei dem D1 und D2 jeweils größer als 0,25 mm und kleiner als 0,40 mm sind, bevorzugt in einem Bereich von 0,28 bis 0,35 mm liegen.

6. Reifen nach einem der Ansprüche 1 bis 5, bei dem die Dichte $d_2$ bzw. $d_3$ der ersten (120) und zweiten (130) metallischen Verstärkungen in den zweiten (C2) bzw. dritten (C3) Kautschuklagen, gemessen in der axialen Richtung (Y), zwischen 100 und 180 Fäden/dm beträgt.

7. Reifen nach einem der Ansprüche 1 bis 6, bei dem die Wärmeschrumpfung CT der textilen Verstärkungen (110) nach 2 min bei 185 °C weniger als 7,5 % beträgt.

8. Reifen nach einem der Ansprüche 1 bis 7, bei dem die mittlere Kautschukdicke $Ez_1$, die eine textile Verstärkung (110) von der ihr nächstgelegenen ersten metallischen Verstärkung (120) trennt, in radialer Richtung (Z) gemessen, kleiner oder gleich 0,60 mm ist, wobei $Ez_1$ im zentralen Teil des Gürtels des Reifens im vulkanisierten Zustand beidseits der Mittelebene (M) über eine axiale Gesamtbreite von 10 cm gemessen wird.

9. Reifen nach einem der Ansprüche 1 bis 8, bei dem die mittlere Kautschukdicke $Ez_2$, die eine erste metallische Verstärkung (120) von der ihr nächstgelegenen zweiten metallischen Verstärkung (130) trennt, in radialer Richtung (Z) gemessen, kleiner oder gleich 0,60 mm ist, wobei $Ez_2$ im zentralen Teil des Gürtels des Reifens im vulkanisierten Zustand beidseits der Mittelebene (M) über eine axiale Gesamtbreite von 10 cm gemessen wird.

10. Reifen nach Anspruch 8, bei dem $Ez_1$ zwischen 0,15 und 0,50 mm beträgt.

11. Reifen nach Anspruch 9, bei dem $Ez_2$ zwischen 0,20 und 0,60 mm beträgt.

12. Reifen nach Anspruch 8, bei dem die folgende Ungleichung erfüllt ist:

$$0,15 < Ez_1 / (Ez_1 + T + D1) < 0,50$$

13. Reifen nach Anspruch 9, bei dem die folgende Ungleichung erfüllt ist:

$$0,20 < Ez_2 / (Ez_2 + D1 + D2) < 0,50$$

14. Reifen nach den Ansprüchen 8 und 9, bei dem die folgende Ungleichung erfüllt ist:

$$0,25 < (Ez_1+Ez_2) / (Ez_1+Ez_2+T+D1+ D2) < 0,60$$

15. Reifen nach einem der Ansprüche 1 bis 14, bei dem das wärmeschrumpfende textile Material, aus dem die textilen Verstärkungen (110) bestehen, ein Polyamid oder ein Polyester ist.

**Claims**

1. Radial tyre (1), defining three main directions, circumferential (X), axial (Y) and radial (Z), comprising a crown (2) surmounted by a tread (3), two sidewalls (4), two beads (5), each sidewall (4) connecting each bead (5) to the crown (2), a carcass reinforcement (7) that is anchored in each of the beads (5) and extends in the sidewalls (4) as far as the crown (2), a crown reinforcement or belt (10) that extends in the crown (2) in the circumferential direction (X) and is situated radially between the carcass reinforcement (7) and the tread (3), the said belt (10) comprising a multilayer composite laminate comprising at least three superposed layers of reinforcers (110, 120, 130), the said reinforcers being unidirectional within each layer and embedded in a thickness of rubber (C1, C2, C3, respectively), with:

   o on the tread side, a first layer of rubber (C1) comprising at least one row of textile reinforcers (110) which are oriented at an angle alpha of -5 to +5 degrees with respect to the circumferential direction (X), these reinforcers (110) being made of a heat-shrinkable textile material;
   o in contact with the first layer (C1) and disposed beneath the latter, a second layer of rubber (C2) comprising a first row of metal reinforcers (120) which are oriented at a given angle beta, positive or negative, of between 10 and 30 degrees with respect to the circumferential direction (X);
   o in contact with the second layer (C2) and disposed beneath the latter, a third layer of rubber (C3) comprising a second row of metal reinforcers (130) which are oriented at an angle gamma the opposite of the angle beta, the said angle gamma itself being between 10 and 30 degrees with respect to the circumferential direction (X);
   o the metal reinforcers (120, 130) being steel monofilaments of which the diameter or thickness, denoted D1 and D2, respectively, is between 0.20 mm and 0.50 mm.

   **characterized in that**:
   o the reinforcers (110) made of heat-shrinkable textile material are tapes with a thickness denoted "T" comprised between 0.1 and 1 mm and width denoted "W" comprised between 2 and 50 mm, these reinforcers have a force of contraction Fc, measured at a temperature of 180°C and under 3% elongation greater than 20 N, the force of contraction being measured in accordance with the standard ASTM D1204-08.

2. Tyre according to Claim 1, in which T is comprised in a range from 0.15 mm to 0.8 mm, preferably from 0.2 to 0.6 mm.

3. Tyre according to either one of Claims 1 or 2, in which W is comprised in a range from 3 mm to 30 mm, preferably from 5 to 20 mm.

4. Tyre according to any one of Claims 1 to 3, in which the density $d_1$ of the textile reinforcers (110) in the first layer of rubber (C1), measured in the axial direction (Y), is between 3 and 50 tapes/dm, preferably between, 5 and 20 tapes/dm.

5. Tyre according to any one of Claims 1 to 4, in which D1 and D2 are each greater than 0.25 mm and less than 0.40 mm, preferably within a range from 0.28 to 0.35 mm.

6. Tyre according to any one of Claims 1 to 5, in which the density, $d_2$ and $d_3$, respectively, of the first (120) and second (130) metal reinforcers in the second (C2) and third (C3) layers of rubber respectively, measured in the axial direction (Y), is between 100 and 180 threads/dm.

7. Tyre according to any one of Claims 1 to 6, in which the thermal contraction CT of the textile reinforcers (110), after 2 min at 185°C, is less than 7.5%.

8. Tyre according to any one of Claims 1 to 7, in which the mean thickness $Ez_1$ of rubber separating a textile reinforcer (110) from the first metal reinforcer (120) closest to it, measured in the radial direction (Z), is less than or equal to 0.60 mm, $Ez_1$ being measured in the central part of the belt of the tyre in the vulcanized state, on either side of the median plane (M) over a total axial width of 10 cm.

9. Tyre according to any one of Claims 1 to 8, in which the mean thickness $Ez_2$ of rubber separating a first metal reinforcer (120) from the second metal reinforcer (130) closest to it, measured in the radial direction (Z), is less than or equal to 0.60 mm, $Ez_2$ being measured in the central part of the belt of the tyre in the vulcanized state, on either side of the median plane (M) over a total axial width of 10 cm.

**10.** Tyre according to Claim 8, in which $Ez_1$ is comprised between 0.15 and 0.50 mm.

**11.** Tyre according to Claim 9, in which $Ez_2$ is comprised between 0.20 and 0.60 mm.

**12.** Tyre according to Claim 8, in which the following inequality is satisfied:

$$0.15 < Ez_1 / (Ez_1 + T + D1) < 0.50$$

**13.** Tyre according to Claim 9, in which the following inequality is satisfied:

$$0.20 < Ez_2 / (Ez_2 + D1 + D2) < 0.50$$

**14.** Tyre according to Claims 8 and 9, in which the following inequality is satisfied:

$$0.25 < (Ez_1 + Ez_2) / (Ez_1 + Ez_2 + T + D1 + D2) < 0.60$$

**15.** Tyre according to any one of Claims 1 to 14, in which the heat-shrinkable textile material of which the textile reinforcers (110) are made is a polyamide or a polyester.

# Fig. 1

# Fig. 2

**Fig. 3**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4371025 A
- FR 2504067
- US 4819705 A
- EP 738615 A
- EP 795426 A
- US 5858137 A
- EP 1162086 A
- US 20020011296 A
- EP 1184203 A
- US 20020055583 A
- WO 2013117476 A
- WO 2013117477 A
- WO 2015014574 A
- WO 2015014575 A
- WO 2010115860 A
- WO 2010115861 A
- WO 2012049177 A
- WO 2012049206 A
- WO 2013019366 A
- WO 2013127685 A
- WO 2014123715 A
- WO 2013017421 A
- WO 2013017422 A
- WO 2013017423 A
- WO 2015007641 A
- WO 2015007642 A